# EUROPEAN PATENT APPLICATION

(11) **EP 3 001 309 A1**
(43) Date of publication of application: **30.03.2016**
(21) Application number: 13887081.1
(22) Date of filing: 02.09.2013
(51) Int. Cl.: G06F 9/445

(54) **APPLICATION MIGRATION METHOD, DEVICE AND SYSTEM FOR MOBILE TERMINAL**

(30) Priority: 21.06.2013 CN 201310250136
(71) Applicant: ZTE Corporation, Shenzhen, Guangdong 518057 (CN)
(72) Inventor: ZHI, Zhou, Shenzhen Guangdong 518057 (CN); LU, Chen, Shenzhen Guangdong 518057 (CN)
(74) Representative: Awapatent AB
(86) International application number: PCT/CN2013/082812
(87) International publication number: WO 2014/201770

(57) **Abstract**

Disclosed are an application migration method, device and system for a mobile terminal, wherein, the application migration method for a mobile terminal includes: obtaining a software installation information table of a first terminal, wherein the software installation information table comprises software IDs; obtaining installation programs corresponding to the software IDs in accordance with the software IDs in the software installation information table and an operating system type of a second terminal, wherein the obtained installation programs are adapted to the operating system type of the second terminal; installing the obtained installation programs for the second terminal. The embodiment of the present invention can expediently install in a new mobile terminal the applications that are the same as the ones in an original mobile terminal.

## Description

### Technical Field

The present invention relates to the field of mobile terminals, and more particularly, to an application migration method, device and system for a mobile terminal.

### Background of the Invention

The intelligent mobile terminal is the general term of a class of devices, which is like a personal computer, has an independent operating system, can be installed by the user itself with programs such as software and games that provided by third-party service providers to continuously expand the functionality of the mobile terminal through such programs, and achieves the wireless network access through mobile communication networks. Such mobile terminals comprise: mobile notebook computers, mobile phones, tablet PCs, portable game consoles and other products with similar forms.

The biggest difference between the intelligent mobile terminal and the ordinary mobile terminal is that: the intelligent mobile terminal has an operating system, which can achieve a variety of functions by installing third-party software, and expand the use of mobile terminals. As the intelligent mobile device can install third-party software, the intelligent mobile terminal has enriched functionality. Typical operating systems in use are: Android, iOS, Symbian, Windows phone and other operating systems. The software therebetween is incompatible with each other.

There are generally the following traditional methods for installing software in an intelligent mobile terminal:
1. The intelligent mobile terminal obtains software installation packages in a wireless or wired manner, and then installs the packages.
2. After a personal computer is connected to the mobile terminal, the personal computer is used to complete the software installation of the intelligent mobile terminal.
3. The software installation is performed with special installation tools of the intelligent mobile terminal, and such software will search for installation packages suitable for the mobile terminal applications, and the installation packages can be the APK-type file in the Android system or the app-type file in the IOS system.

In the process of a user using the intelligent mobile terminal, a lot of application software may be installed. After the user mobile terminal is lost, the system is damaged or the user upgrades to new mobile terminal, it may be desirable to install the software applications originally used, so that the user needs to search for original software installation packages one by one, whose operation is relatively cumbersome.

### Summary of the Invention

The present invention provides an application migration method, device and system for a mobile terminal, for a user expediently installing in a new mobile terminal applications consistent with those in an original mobile terminal after replacing the mobile terminal.

The present invention provides an application migration method for a mobile terminal, comprising:
obtaining a software installation information table of a first terminal, wherein the software installation information table comprises: software IDs;
obtaining installation programs corresponding to the software IDs according to the software IDs in the software installation information table and an operating system type of a second terminal, wherein the obtained installation programs are adapted to the operating system type of the second terminal;
installing the obtained installation programs for the second terminal.

Preferably, the step of obtaining a software installation information table of a first terminal comprises:
obtaining a pre-stored software installation information table of the first terminal from the first terminal, a computer, a portable storage device or a cloud storage.

Preferably, the step of obtaining installation programs corresponding to the software IDs according to the software IDs in the software installation information table and an operating system type of a second terminal is:
obtaining a terminal type of the second terminal;
obtaining installation programs corresponding to the software IDs according to the software IDs in the software installation information table, the operating system type of the second terminal and the terminal type of the second terminal, wherein the obtained installation programs are adapted to the terminal type of the second terminal and to the operating system type of the second terminal.

Preferably, the software installation information table further comprises: an operating system type of the first terminal and storage addresses of software installation programs corresponding to the software IDs;
The step of obtaining installation programs corresponding to the software IDs according to the software IDs in the software installation information table and an operating system type of a second terminal comprises:
when the operating system type of the first terminal is consistent with the operating system type of the second terminal, downloading the software installation programs from the storage addresses;
when the operating system type of the first terminal is inconsistent with the operating system type of the second terminal, searching for installation programs corresponding to the software IDs according to the software IDs in the software installation information table and the operating system type of the second terminal, and downloading the searched-out installation programs.

Preferably, the step of obtaining installation programs corresponding to the software IDs according to the software IDs in the software installation information table and an operating system type of a second terminal comprises:
searching for corresponding installation programs in the second terminal or the computer according to the software IDs in the software installation information table and the operating system type of the second terminal;
when the searching fails, searching for the corresponding installation programs in a predetermined website according to the software IDs in the software installation information table and the operating system type of the second terminal.

Preferably, the software installation information table further comprises: current software version numbers of the software IDs;
the step of searching for the corresponding installation programs in a predetermined website comprises:
when searching out at least two installation programs, selecting the installation program consistent with the current version number; or; when searching out at least two installation programs, selecting the installation program with a latest version.

Preferably, before the step of obtaining a software installation information table of a first terminal, the method further comprises:
generating the software installation information table of the first terminal according to the application software installed in a first mobile terminal.

The software installation information table further comprises: current software version numbers;
preferably, after the step of generating the software installation information table of the first terminal, the method further comprises:
when update the software in the first mobile terminal, updating the current software version number in the software installation information table.

On the other hand, there is provided an application migration device for a mobile terminal, comprising:
a first obtaining unit, configured to: obtain a software installation information table of a first terminal, wherein the software installation information table comprises: software IDs;
a second obtaining unit, configured to: obtain installation programs corresponding to the software IDs according to the software IDs in the software installation information table as well as the operating system type of a second terminal, wherein the obtained installation programs are adapted to the operating system type of the second terminal;
an installing unit, configured to: installing the obtained installation programs for the second terminal.

Preferably, the first obtaining unit is configured to:
obtain a pre-stored software installation information table of the first terminal from the first terminal, a computer, a portable storage device or a cloud storage.

Preferably, the second obtaining unit comprises:
a first obtaining subunit, configured to: obtain the terminal type of the second terminal;
a second obtaining subunit, configured to: obtain installation programs corresponding to the software IDs according to the software IDs in the software installation information table, the operating system type of the second terminal and the terminal type of the second terminal, wherein the obtained installation programs are adapted to the terminal type of the second terminal and to the operating system type of the second terminal.

Preferably, the software installation information table further comprises: an operating system type of the first terminal and storage addresses of software installation programs corresponding to the software IDs;
the second obtaining unit comprises:
a downloading subunit, configured to: when the operating system type of the first terminal is consistent with the operating system type of the second terminal, download the software installation programs from the storage addresses;
a first searching subunit, configured to: when the operating system type of the first terminal is inconsistent with the operating system type of the second terminal, search for installation programs corresponding to the software IDs according to the software IDs in the software installation information table as well as the operating system type of the second terminal, and download the searched-out installation programs.

Preferably, the second obtaining unit comprises:
a second searching subunit, configured to: search for corresponding installation programs in the second terminal or the computer according to the software IDs in the software installation information table as well as the operating system type of the second terminal;
a third searching subunit, configured to: when the searching fails, search for the corresponding installation programs in a predetermined website according to the software IDs in the software installation information table as well as the operating system type of the second terminal.

On the other hand, there is provided an application migration system for a mobile terminal, comprising: a first terminal, a second terminal, and an application migration device for a mobile terminal;
the application migration device for a mobile terminal is configured to: obtain a software installation information table of the first terminal, wherein the software installation information table comprises software IDs; obtain installation programs corresponding to the software IDs according to the software IDs in the software installation information table are adapted the operating system type of the second terminal, wherein the obtained installation programs to the operating system type of the second terminal; install the obtained installation programs for the second terminal.

The beneficial effects of the abovementioned technical solution in accordance with the embodiments of the present invention are as follows: when a user changes a first terminal to a second terminal, the user can obtain installation programs corresponding to the software IDs according to the software IDs in the software installation information table of the first terminal as well as the operating system type of the second terminal, wherein the obtained installation programs are adapted to the operating system type of the second terminal; and install the obtained installation programs for the second terminal. The user does not need to manually search for and manually install the application programs one by one, which facilitates the user's operation.

### Brief Description of the Drawings

FIG. 1 is a schematic diagram of the flow chart of an embodiment of an application migration method for a mobile terminal in accordance with the present invention;
FIG. 2 is a schematic diagram of the flow chart of another embodiment of an application migration method for a mobile terminal in accordance with the present invention;
FIG. 3 is a connection diagram of an application migration device for a mobile terminal in accordance with the present invention;
FIG. 4 is a connection diagram of an application migration system for a mobile terminal in accordance with the present invention;
FIG. 5 is a schematic diagram of another embodiment of mobile terminal software migration in accordance with the present invention.

### Preferred Embodiments of the Invention

Hereinafter, in conjunction with the accompanying drawings, specific embodiments will be described in detail.

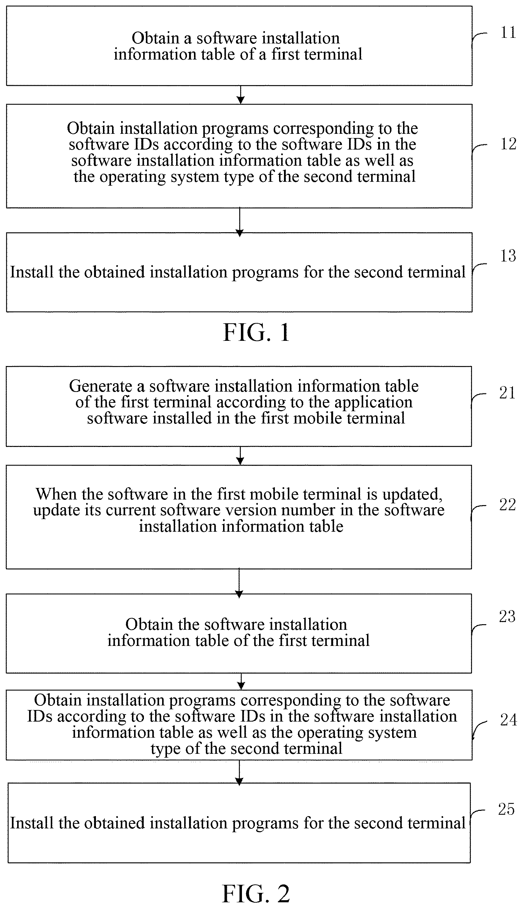

As shown in FIG. 1, the present invention provides an application migration method for a mobile terminal, comprising:
in step 11, it is to obtain a software installation information table of a first terminal, wherein the software installation information table comprises software IDs; this step comprises: obtaining a pre-stored software installation information table of the first terminal from the first terminal, a computer, a mobile device or a cloud storage. Wherein, the software IDs can be software names.
In step 12, it is to obtain installation programs corresponding to the software IDs according to the software IDs in the software installation information table as well as the operating system type of the second terminal, wherein the obtained installation programs are adapted to the operating system type of the second terminal;
in step 13, it is to install the obtained installation programs for the second terminal.

In one embodiment, the step 12 comprises:
in step 121A, it is to obtain the terminal type of the second terminal;
in step 122A, it is to obtain installation programs corresponding to the software IDs according to the software IDs in the software installation information table, the operating system type of the second terminal and the terminal type the second terminal, the obtained installation programs are adapted to the terminal type of the second terminal and to the operating system type of the second terminal.

In another embodiment, the software installation information table further comprises: the operating system type of the first terminal as well as storage addresses of the software installation programs corresponding to the software IDs;
the step 12 comprises:
in step 121B, when the operating system type of the first terminal is consistent to the operating system type of the second terminal, it is to download the software installation programs from the storage addresses;
in step 122B, when the operating system type of the first terminal is inconsistent with the operating system type of the second terminal, it is to search for installation programs corresponding to the software IDs according to the software IDs in the software installation information table as well as the operating system type of the second terminal, and download the searched-out installation programs.

In another embodiment, the step 12 comprises:
in step 121C, it is to search for the corresponding installation programs in the second terminal or a computer according to the software IDs in the software installation information table as well as the operating system type of the second terminal;
in step 122C, when the searching fails, it is to search for corresponding installation programs on a predetermined website according to the software IDs in the software installation information table as well as the operating system type of the second terminal.

As shown in FIG. 2, it is another embodiment of an application migration method for a mobile terminal in accordance with the present invention, comprising:
in step 21, it is to generate a software installation information table of the first terminal according to the application software installed in the first mobile terminal. The software installation information table comprises software IDs, and the software installation information table further comprises: current software version numbers;
in step 22, when the software in the first mobile terminal is updated, it is to update its current software version number in the software installation information table.
In step 23, it is to obtain the software installation information table of the first terminal, and the step comprises: obtaining a pre-stored software installation information table of the first terminal from the first terminal, a computer, a mobile device or a cloud storage.
In step 24, it is to obtain installation programs corresponding to the software IDs according to the software IDs in the software installation information table as well as the operating system type of the second terminal, wherein the obtained installation programs are adapted to the operating system type of the second terminal;
In step 25, it is to install the obtained installation programs for the second terminal.

In another embodiment, the step 24 comprises:
in step 241, it is to search for the corresponding installation programs in the second terminal or a computer according to the software IDs in the software installation information table as well as the operating system type of the second terminal,;
in step 242, when the searching fails, it is to search for the corresponding installation programs on a predetermined website according to the software IDs in the software installation information table as well as the operating system type of the second terminal. Specifically: when searching out at least two installation programs, selecting the installation program consistent with the current version number; or; when searching out at least two installation programs, selecting the installation program with the latest version. A different selection strategy may be taken based on the user's settings.

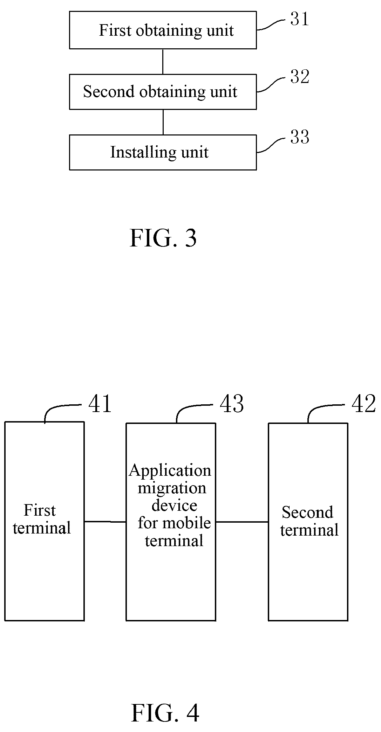

As shown in FIG. 3, the present invention provides an application migration device for a mobile terminal, comprising:
a first obtaining unit 31, which obtains a software installation information table of a first terminal, wherein the software installation information table comprises software IDs; the first obtaining unit 31 specifically is: obtaining a pre-stored software installation information table of the first terminal from the first terminal, a computer, a portable storage device or a cloud storage;
a second obtaining unit 32, which obtains installation programs corresponding to the software IDs according to the software IDs in the software installation information table as well as the operating system type of a second terminal, wherein the obtained installation programs are adapted to the operating system type of the second terminal;
an installing unit 33, which installs the obtained installation programs for the second terminal.

The second obtaining unit 32 comprises:
A first obtaining subunit 321, which obtains the terminal type of the second terminal;
A second obtaining subunit 322, which obtains installation programs corresponding to the software IDs according to the software IDs in the software installation information table, the operating system type of the second terminal and the terminal type of the second terminal, wherein the obtained installation programs are adapted to the terminal type of the second terminal and to the operating system type of the second terminal.

Alternatively, the software installation information table further comprises: an operating system type of the first terminal as well as storage addresses of software installation programs corresponding to the software IDs;
the second obtaining unit 322 comprises:
a downloading subunit, which downloads software installation programs from the storage addresses when the operating system type of the first terminal is consistent with the operating system type of the second terminal;
a first searching subunit, which, when the operating system type of the first terminal is inconsistent with the operating system type of the second terminal, searches for installation programs corresponding to the software IDs according to the software IDs in the software installation information table as well as the operating system type of the second terminal, and downloads the searched-out installation programs.

Alternatively, the second obtaining unit 322 comprises:
a second searching subunit, which searches for corresponding installation programs in the second terminal or the computer according to the software IDs in the software installation information table as well as the operating system type of the second terminal;
a third searching subunit, which, when the searching fails, searches for the corresponding installation programs on a predetermined website according to the software IDs in the software installation information table as well as the operating system type of the second terminal.

As shown in FIG. 4, there is provided an application migration system for a mobile terminal, comprising: a first terminal 41, a second terminal 42, and an application migration device for a mobile terminal 43;
the application migration device for a mobile terminal 43 obtains a software installation information table of the first terminal 41, wherein the software installation information table comprises software IDs; obtains installation programs corresponding to the software IDs according to the software IDs in the software installation information table as well as the operating system type of the second terminal, wherein the obtained installation programs are adapted to the operating system type of the second terminal; installs the obtained installation programs for the second terminal 42.

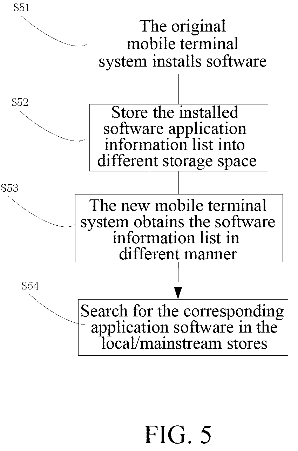

The present invention provides a method for migrating application software between different mobile terminals, to achieve application migration between different mobile terminals and mobile terminals on different system platforms by means of automatically installing in the new terminal the original software in the old terminal. A shown in FIG. 5, the working process is as follows, comprising:
In S51, the original mobile terminal installs software and generates an installed software application information list.
In S52, the original mobile terminal stores the installed software application information list; and the application information list comprises software names and software sources. Wherein, the list can be stored in the cloud. The cloud can be a private cloud or a public cloud, when stored in the cloud, the mobile terminal can access to the cloud information through the key authentication. The list may also be stored in a computer, a local mobile terminal memory or another storage device. Herein, the installed software application information list is the abovementioned software installation information table.
In S53, the new mobile terminal obtains the installed software application information list of the original mobile terminal.
In S54, according to the original storage information, it is to search in the local storage space (including a local computer, a mobile terminal memory or another storage device) and/or a cloud storage space. If the installation packages of the corresponding installed software application information list are obtained in the local storage space, the users of mobile terminal can selectively install or complete the installation through the automatic mode. If they cannot be obtained in local, it is to automatically search in the online application stores for the relevant applications according to the software installation information. Herein, the order of the online application stores to be searched can be sorted according to the existing official application stores and the mainstream applications stores, and application software corresponding to the software installation information is searched in accordance with a certain order. Herein, it can be set to automatically install or select the updated software version through a manual intervention or maintain the software version preferred by the user.

For different mobile terminal system software platforms, it should search for different corresponding application program types, for example, an Android mobile terminal searches for the Google application store and popular third-party Android application stores. The Apple mobile terminal searches for the corresponding App Store and third-party application stores. The Microsoft platform mobile terminal searches for its corresponding application stores. Different types of application stores can pre-store the list in the mobile terminal, and can modify the search target automatically or manually.

If the user changes the operating system, the user can use the information of the software installation information table stored in the original phone to search for the corresponding software in the local installation packages and application stores corresponding to the new system software.

After the user backs up all the software installation information into the cloud, with the user's permission, the mobile terminal user can receive a software update prompt sent by the cloud in order to complete the software upgrade.

The software installation information table can be a table, as shown in the following table, which comprises the software name, the software source, the software version, and other software relevant information. In addition that the application form indicates the installation information, it can also use the configuration file mode to record the software installation information, which comprises related information of the installed software. The software installation information table or the configuration file can be identified by software systems of different intelligent terminal systems, and its format can be excel, text and any other universal file format, as the following table:

**Software Installation Information Table**

| Software name | Software source | Software version |
|---|---|---|
| Software 1 | Software market A | x.y.z |
| Software 2 | Software market B | a.b.c |

This method is also applicable to other personal information backup including documents and phone book information permitted by the user, and the information may also be obtained through this method.

In the following, application scenarios of the present invention will be described.
The First Application Scenario
   After the user's mobile terminal is lost, the original application software is restored through the cloud.
   1) When the original mobile terminal installs the application software, a corresponding software installation information table will be generated.
   2) It is to storing the software installation information table, and the installation information table can be stored in the cloud.
   3) The user obtains a new mobile terminal, and through the password authentication, the software installation information table of the original mobile terminal software system is obtained from the cloud.
   4) The mobile terminal first searches for installation packages of the software applications corresponding to the operating system in local by means of the software installation information in the software installation information table, and then searches in the mainstream application stores (including official and third-party application stores).

   After searching out relevant software, the user can manually or automatically install this software, so that the software migration can be completed in the system of the new mobile terminal. If the relevant software cannot be searched out, the user is prompted that the application does not exist.
The Second Application Scenario
   After the mobile terminal is lost, the installed software information can be obtained in local in order to restore the original application software.
   1) When the user installs application software in the original mobile terminal, a corresponding software installation information table is generated.
   2) It is to storing the software installation information table, and the installation information table can be stored in a local memory of the original mobile terminal, a local computer or any other external memory.
   3) After the user obtains a new mobile terminal, the user accesses to the network in a wired or wireless manner, and tries to obtain the software installation information table in the software system of the original mobile terminal from different memory sources in the local.
   4) The mobile terminal first searches for installation package of the software applications corresponding to the operating system in the local through the software installation information in the software installation information table, and then searches in the mainstream application stores (including official and third-party application stores).

   If relevant software is searched out, the user can manually or automatically install this software, so that the application software migration can be completed in the system of the new mobile terminal. If the relevant software cannot be searched out, the user is prompted that this application does not exist.
The Third Application Scenario
   After the user changes to a new mobile terminal, the user can complete the application software restore through the local information.
   1) The original mobile terminal generates a corresponding software installation information table when installing the application software.
   2) It is to storing the software installation information table, wherein the installation information table can be stored in a local memory of the original mobile terminal, a local computer or an external memory, and the software installation information table can be stored in a remote cloud and accessed through the password authentication.
   3) After the user changes to a new mobile terminal, the software installation information table can be obtained by connecting to the original mobile terminal, the local computer, or the memory in a wired or wireless mode via Bluetooth, Wi-Fi, or USB, or the software installation information table stored in the original mobile terminal can be obtained through the cloud.
   4) The mobile terminal first searches for corresponding installation package of the Android application software in the local according to the software installation information in the software installation information table, and then searches in the mainstream application stores (including official and third-party application stores).

   If relevant software is searched out, the user can manually or automatically install this software, so that the application software migration can be completed in the system of the new mobile terminal. If the relevant software cannot be searched out, the user is prompted that this application does not exist.
The Fourth Application Scenario
   After the user changes to a new mobile terminal, the application software restore is completed through the cloud data.
   1) When the original mobile terminal installs the application software, a corresponding software installation information table is generated.
   2) It is to storing the installation software information table, and the installation information table can be stored in a local memory of the original mobile terminal, a local computer or an external memory, and the software installation information table can also be stored in a remote cloud.
   3) After changing to a new mobile terminal, the user can connect to the cloud and obtain the installed software information of the original mobile terminal stored the cloud through the password authentication.
   4) The mobile terminal accesses to the network in a wired or wireless mode through the software installation information in the software installation information table, and first searches for installation package of the corresponding Android software applications in the local, and then searches in the mainstream software application stores (including official and third-party application stores).

   After relevant software is searched out, the user can manually or automatically install this software, so that the application software migration can be completed in the system of the new mobile terminal. If the relevant software cannot be searched out, the user is prompted that this application does not exist.
The Fifth Application Scenario
   The software is migrated between mobile terminals of different mobile terminal platforms, and the IOS platform changes into the Android platform.
   1) The original mobile terminal is an iphone mobile terminal, and a corresponding software installation information table is generated when installing application software.
   2) It is to storing the software installation information table, wherein the installation information table can be stored in a local memory of the original mobile terminal, a local computer or an external memory. This software installation information table may also be stored in a remote cloud.
   3) The user changes to a new Android mobile terminal, and obtains the software installation information table of the original iphone mobile terminal through different local memory sources or clouds.
   4) The Android mobile terminal first searches for corresponding installation package of the Android software applications in local according to the software installation information in the software installation information table, and then searches in the mainstream Android application stores (including official and third-party application stores).

After relevant software is searched out, the user can manually or automatically install this software, so that the application software migration can be completed in the system of the new mobile terminal. If the relevant software cannot be searched out, the user is prompted that this application does not exist.

The fifth embodiment is not limited to software migration between the IOS and Android systems, a similar method can be used to complete the application software migration between other intelligent systems such as IOS, android, windows phone, or Blackberry.

In the embodiments of the present invention, the modules (or units) can be implemented in software so as to be executed by various types of processors. For example, the executable code module of an identifier may comprise one or more physical or logical blocks of computer instructions, for example, it may be constructed as an object, procedure, or function. Nevertheless, the executable codes of the identifying module don't need to be physically located together, they may comprise different commands stored in different physical subjects, and when these commands are logically combined together, they constitute into a module and achieve the specific purpose of this module.

In fact, the executable code module may be a single command or many commands, and may even be distributed over several different code segments and distributed in different programs, and distributed across multiple storage devices. Similarly, the operational data may be identified within the module, and may be implemented in any suitable form and organized within any suitable type of data structure. The operational data may be collected as a single data set, or may be distributed in different locations (including different storage devices), and at least in part, they can exist as electronic signals in a system or network.

When a module can be implemented in software, taking into account the level of existing hardware technology, for the module implemented in software, without considering the cost, those skilled in the art can build a corresponding hardware circuit to achieve the corresponding function, and the hardware circuit comprises conventional very large scale integrated (VLSI) circuits or gate arrays, as well as conventional semiconductors such as logic chips and transistors, or other discrete components. The module may also be realized with programmable hardware devices such as field programmable gate arrays, programmable array logic, programmable logic devices or the like.

In each method embodiment of the present invention, the serial numbers of respective steps cannot be used to limit the order of each step, for those of ordinary skill in the field, on the premise of without creative effort, the changes in the order of the steps should also be within the protection scope of the present invention.

The above description is preferred embodiments of the present invention, it should be noted that, for those of ordinary skill in the art, a number of improvements and modifications can be made without departing from the principles of the present invention, and these improvements and modifications should also be considered within the protection scope of the present invention.

### Industrial Applicability

The beneficial effects of the abovementioned technical solution in accordance with the embodiments of the present invention are as follows: when a user changes a first terminal to a second terminal, the user can obtain installation programs corresponding to the software IDs according to the software IDs in the software installation information table of the first terminal as well as the operating system type of the second terminal, wherein the obtained installation programs are adapted to the operating system type of the second terminal; and install the obtained installation programs for the second terminal. The user does not need to manually search for and manually install the application programs on by one, which facilitates the user's operation.

## Claims

1. An application migration method for a mobile terminal, comprising:
obtaining a software installation information table of a first terminal, wherein the software installation information table comprises: software IDs;
obtaining installation programs corresponding to the software IDs according to the software IDs in the software installation information table and an operating system type of a second terminal, wherein the obtained installation programs are adapted to the operating system type of the second terminal;
installing the obtained installation programs for the second terminal.

2. The application migration method for a mobile terminal according to claim 1, wherein, the step of obtaining a software installation information table of a first terminal comprises:
obtaining a pre-stored software installation information table of the first terminal from the first terminal, a computer, a portable storage device or a cloud storage.

3. The application migration method for a mobile terminal according to claim 1, wherein, the step of obtaining installation programs corresponding to the software IDs according to the software IDs in the software installation information table and an operating system type of a second terminal is:
obtaining a terminal type of the second terminal;
obtaining installation programs corresponding to the software IDs according to the software IDs in the software installation information table, the operating system type of the second terminal and the terminal type of the second terminal, wherein the obtained installation programs are adapted to the terminal type of the second terminal and to the operating system type of the second terminal.

4. The application migration method for a mobile terminal according to claim 1, wherein,
the software installation information table further comprises: an operating system type of the first terminal and storage addresses of software installation programs corresponding to the software IDs;
the step of obtaining installation programs corresponding to the software IDs according to the software IDs in the software installation information table and an operating system type of a second terminal comprises:
when the operating system type of the first terminal is consistent with the operating system type of the second terminal, downloading the software installation programs from the storage addresses;
when the operating system type of the first terminal is inconsistent with the operating system type of the second terminal, searching for installation programs corresponding to the software IDs according to the software IDs in the software installation information table and the operating system type of the second terminal, and downloading the searched-out installation programs.

5. The application migration method for a mobile terminal according to claim 1, wherein,
the step of obtaining installation programs corresponding to the software IDs according to the software IDs in the software installation information table and an operating system type of a second terminal comprises:
searching for corresponding installation programs in the second terminal or the computer according to the software IDs in the software installation information table and the operating system type of the second terminal;
when the searching fails, searching for the corresponding installation programs in a predetermined website according to the software IDs in the software installation information table and the operating system type of the second terminal.

6. The application migration method for a mobile terminal according to claim 5, wherein,
the software installation information table further comprises: current software version numbers of the software IDs;
the step of searching for the corresponding installation programs in a predetermined website comprises:
when searching out at least two installation programs, selecting the installation program consistent with the current version number; or; when searching out at least two installation programs, selecting the installation program with a latest version.

7. The application migration method for a mobile terminal according to claim 1, wherein, before the step of obtaining a software installation information table of a first terminal, the method further comprises:
generating the software installation information table of the first terminal according to application software installed in a first mobile terminal.

8. The application migration method for a mobile terminal according to claim 7, wherein,
the software installation information table further comprises: current software version numbers;
after the step of generating the software installation information table of the first terminal, the method further comprises:
when updating the software in the first mobile terminal, updating the current software version number in the software installation information table.

9. An application migration device for a mobile terminal, comprising:
a first obtaining unit, configured to: obtain a software installation information table of a first terminal, wherein the software installation information table comprises: software IDs;
a second obtaining unit, configured to: obtain installation programs corresponding to the software IDs according to the software IDs in the software installation information table as well as an operating system type of a second terminal, wherein the obtained installation programs are adapted to the operating system type of the second terminal;
an installing unit, configured to: install the obtained installation programs for the second terminal.

10. The application migration device for a mobile terminal according to claim 9, wherein, the first obtaining unit is configured to:
obtain a pre-stored software installation information table of the first terminal from the first terminal, a computer, a portable storage device or a cloud storage.

11. The application migration device for a mobile terminal according to claim 9, wherein, the second obtaining unit comprises:
a first obtaining subunit, configured to: obtain a terminal type of the second terminal;
a second obtaining subunit, configured to: obtain installation programs corresponding to the software IDs according to the software IDs in the software installation information table, the operating system type of the second terminal and the terminal type of the second terminal, wherein the obtained installation programs are adapted to the terminal type of the second terminal and to the operating system type of the second terminal.

12. The application migration device for a mobile terminal according to claim 9, wherein,
the software installation information table further comprises: an operating system type of the first terminal and storage addresses of software installation programs corresponding to the software IDs;
the second obtaining unit comprises:
a downloading subunit, configured to: when the operating system type of the first terminal is consistent with the operating system type of the second terminal, download the software installation programs from the storage addresses;
a first searching subunit, configured to: when the operating system type of the first terminal is inconsistent with the operating system type of the second terminal, search for installation programs corresponding to the software IDs according to the software IDs in the software installation information table as well as the operating system type of the second terminal, and download the searched-out installation programs.

13. The application migration device for a mobile terminal according to claim 9, wherein,
the second obtaining unit comprises:
a second searching subunit, configured to: search for corresponding installation programs in the second terminal or the computer according to the software IDs in the software installation information table and the operating system type of the second terminal;
a third searching subunit, configured to: when the searching fails, search for the corresponding installation programs in a predetermined website according to the software IDs in the software installation information table as well as the operating system type of the second terminal.

14. An application migration system for a mobile terminal, comprising: a first terminal, a second terminal, and an application migration device for a mobile terminal, wherein,
the application migration device for a mobile terminal is configured to: obtain a software installation information table of the first terminal, wherein the software installation information table comprises software IDs; obtain installation programs corresponding to the software IDs according to the software IDs in the software installation information table and an operating system type of the second terminal, wherein the obtained installation programs are adapted to the operating system type of the second terminal; install the obtained installation programs for the second terminal.
